# EUROPEAN PATENT APPLICATION

(11) **EP 1 767 883 A2**
(43) Date of publication of application: **28.03.2007**
(21) Application number: 06019644.1
(22) Date of filing: 20.09.2006
(51) Int. Cl.: F25B 41/06

(54) **Pressure control valve**

(30) Priority: 22.09.2005 JP 2005276513
(71) Applicant: Fujikoki Corporation, Tokyo 158-0082 (JP)
(72) Inventor: Ise, Sadatake, Setagaya-ku Tokyo 158-0082 (JP); Tomaru, Masaki, Setagaya-ku Tokyo 158-0082 (JP); Asano, Hisashi, Setagaya-ku Tokyo 158-0082 (JP)
(74) Representative: Grosse, Rainer

(57) **Abstract**

A pressure control valve comprising a valve main body (10A) having a high-pressure refrigerant inlet port (11) and a low-pressure refrigerant outlet port (12); a valve seat-attached valved passageway (20) formed in the valve main body (10A) for decompressing and guiding the refrigerant from the high-pressure refrigerant inlet port (11) to the low-pressure refrigerant outlet port (12) and configured to enable a differential pressure regulating valve (15) to be fitted therein; and a throttling passageway (30) provided with an orifice (32) having a predetermined effective cross-sectional area for enabling the high-pressure refrigerant inlet port (11) to communicate, through short-cutting or detouring the valve seat (21), with a region of the valved passageway which is located downstream side of the valve seat (21), thereby enabling a magnitude of lift of the differential pressure regulating valve (15) from the valve seat (21) to be altered depending on a magnitude of difference in pressure between a high-pressure side and a low-pressure side.

## Description

### BACKGROUND OF THE INVENTION

The present invention relates to a pressure control valve which is adapted to be integrated into a steam-compression type refrigerating cycle where CO₂ is employed as a refrigerant (CO₂ cycle) for adjusting the pressure of refrigerant on the outlet side of gas cooler (radiator). In particular, the present invention relates to a pressure control valve which is suitable for use in a steam-compression type refrigerating cycle to be employed in a car air conditioner provided with an internal heat exchanger for performing heat exchange between the refrigerant on the outlet side of an evaporator and the refrigerant on the outlet side of the gas cooler.

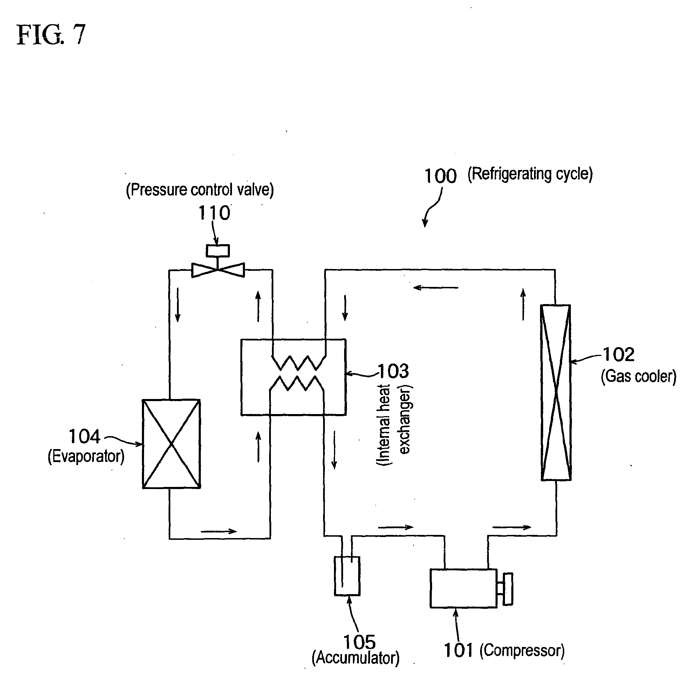

FIG. 7 shows one example of the steam-compression type refrigerating cycle into which a pressure control valve of this kind can be integrated. The refrigerating cycle 100 shown herein is constituted by: a compressor 101 for circulating CO₂ employed as a refrigerant; a gas cooler (radiator) 102 for cooling the refrigerant that has been compressed by the compressor 101; an evaporator 104 into which the refrigerant is designed to be introduced from the gas cooler 102; an internal heat exchanger 103 for performing heat exchange between the refrigerant on the outlet side of the evaporator 104 and the refrigerant on the outlet side of the gas cooler 102; an accumulator (gas-liquid separator) 105 for dividing the refrigerant from the evaporator 104 into a gas phase refrigerant and a liquid phase refrigerant and for introducing the gas phase refrigerant into the intake side of the compressor 101 through the heat exchanger 103 while accumulating surplus refrigerant; and a pressure control valve (expansion valve) 110 for passing the refrigerant to the evaporator 104 after adjusting the pressure of the refrigerant that has been introduced via the internal heat exchanger 103 into the pressure control valve 110 from the gas cooler 102.

The pressure control valve 110 is provided for effectively operating the refrigerating cycle 100. In other words, the pressure control valve 110 is provided for adjusting the pressure (adiabatic expansion) of the refrigerant on the outlet side of the gas cooler 102 so as to secure a maximum coefficient of performance in the refrigerating cycle 100. As for the method of adjusting the pressure of the refrigerant, there has been mainly employed a temperature-depending system wherein the pressure of refrigerant is adjusted depending on the temperature of refrigerant existing on the outlet side of the gas cooler 102 (see for example JP Patent Laid-open Publication (Kokai) No. 2001-81157 (2001) .

In the case of this pressure control valve of temperature depending system however, when the temperature of outer atmosphere is high, the pressure control valve may be overheated by the solar radiation or by the heat from engine as the motor car is left outdoors. When the pressure control valve is overheated, the pressure of refrigerant is increased, imposing an excessive stress on the pressure control valve in such a way to close the valve. As a result, malfunctions such as failure to open the valve on the occasion of operating the compressor (especially on the occasion of starting the compressor) are caused to occur. As a result, the discharge pressure may be abnormally increased, giving rise to breakdown or destruction of high-pressure side apparatuses such as an internal heat exchanger, a gas cooler, a compressor, etc.

Further, with respect to the construction thereof, there are problems that temperature sensing means or a relief valve for avoiding troubles at high temperatures is required to be installed, thus complicating the structure of control valve or increasing the manufacturing cost.

On the other hand, as seen from JP Patent Laid-open Publication (Kokai) No. 2004-142701 (2004), there is known, as a pressure control valve which does not depend on the temperature of refrigerant, a structure where the magnitude of opening of valve is to be adjusted depending only on the fluctuation of pressure of refrigerant which can be detected by a pressure sensitive element. Furthermore, as seen from JP Patent Laid-open Publication (Kokai) No. 2002-520572 (2002) and JP Patent Laid-open Publication (Kokai) No. 2000-146365 (2000), there is also known, as a pressure control valve which does not depend on the temperature of refrigerant, a structure which is provided with a stationary orifice and relief valve, wherein the stationary orifice is employed to restrict the flow rate of refrigerant to a constant level, and when the pressure of refrigerant on the high pressure side is increased over a certain level, the relief valve is forced to open by a difference of pressure between the refrigerant of high pressure side and the refrigerant of low pressure side, thereby making it possible to decrease the pressure of high pressure side, and when the pressure of refrigerant on the high pressure side is decreased down to a certain level, the relief valve is forced to close.

However, even in the case of the aforementioned pressure-depending type pressure control valve, there is increasing demands to further reduce the manufacturing cost in recent years. Therefore, it is now strongly demanded to develop a pressure control valve, which is simple in structure, low in manufacturing cost and enhanced in operation efficiency.

### BRIEF SUMMARY OF THE INVENTION

The present invention has been made in response to the problems and demands mentioned above and, therefore, an object of the present invention to provide a pressure control valve which is capable of appropriately adjusting the pressure of the refrigerant on the outlet side of the gas cooler, capable of reliably preventing the malfunctions of valve such as failure to open the valve due to an increase in pressure of refrigerant at high temperatures, and capable of achieving the simplification of structure, the reduction of manufacturing cost and the enhancement of operation efficiency.

With a view to achieve the aforementioned object, there is provided, according to one aspect of the present invention, a pressure control valve which is adapted to be integrated into a steam-compression type refrigerating cycle which is constituted by: a compressor for circulating CO₂ employed as a refrigerant, a gas cooler for cooling the refrigerant of high pressure that has been compressed by the compressor, an evaporator into which the refrigerant is introduced from the gas cooler after being adjusted of its pressure, and an internal heat exchanger for performing heat exchange between the refrigerant of low pressure on the outlet side of the evaporator and the refrigerant of high pressure on the outlet side of the gas cooler; the pressure control valve being constructed to pass the refrigerant to the evaporator after adjusting the pressure of the refrigerant that has been introduced therein via the internal heat exchanger from the gas cooler. This pressure control valve is fundamentally constructed to comprise a valve main body having a high-pressure refrigerant inlet port and a low-pressure refrigerant outlet port, a valve seat-attached valved passageway formed in the valve main body for decompressing and guiding the refrigerant from the high-pressure refrigerant inlet port to the low-pressure refrigerant outlet port and configured to enable a differential pressure regulating valve to be fitted therein, and a throttling passageway provided with an orifice having a predetermined effective cross-sectional area for enabling the high-pressure refrigerant inlet port to communicate, through short-cutting or detouring the valve seat, with a region of the valved passageway which is located downstream side of the valve seat, thereby enabling a magnitude of lift of the differential pressure regulating valve from the valve seat to be altered depending on a magnitude of difference in pressure between a high-pressure side and a low-pressure side.

Preferably, the valve seat-attached valved passageway is constituted by a cylinder portion formed contiguous with the high-pressure refrigerant inlet port and provided, at a downstream end portion thereof, with the valve seat, an enlarged spring chamber formed contiguous with the downstream side of the cylinder portion and having a larger diameter than a diameter of the cylinder portion, a downstream passageway formed contiguous with the low-pressure refrigerant outlet port, and a communicating passageway for enabling the spring chamber to communicate with the downstream passageway.

In a preferable embodiment, the differential pressure regulating valve is constructed to comprise a valve portion mounted retractively on the valve seat, a piston inserted slidably in the cylinder portion and having a diametrally enlarged portion on the distal end side thereof and a diametrally contracted portion on the valve portion side, and a spring shoe for receiving a valve-closing spring placed in the spring chamber, wherein the piston is provided therein with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port.

In another preferable embodiment, a vibration-proof O-ring is interposed between a distal end portion of the diametrally enlarged portion of the piston of the differential pressure regulating valve and the cylinder portion.

Preferably, the valve portion of the differential pressure regulating valve is configured to have a circular conical surface.

In a further preferable embodiment, an adjusting screw is screw-engaged with the spring chamber so as to make it possible to adjust the set-load of the valve-closing valve.

Preferably, the throttling passageway is constituted by a throttling hole-attached passageway formed contiguous with the low-pressure refrigerant outlet port, and a by-pass passageway formed so as to detour the valve seat portion and enabling the high-pressure refrigerant inlet port to be communicated with a region of the throttling hole-attached passageway which is located upstream in relative with the throttling hole.

Preferably, the orifice of the throttling passageway is constituted by a throttling hole having a predetermined pore size, and a needle valve which is designed to be inserted into the throttling hole.

In a further preferable embodiment, the position of the needle valve is made displaceable in relative to the throttling hole as so to make it possible to adjust the effective cross-sectional area of the passageway of the orifice.

In a further preferable embodiment, the valve seat-attached valved passageway is constituted by a cylinder portion formed contiguous with the high-pressure refrigerant inlet port and provided, at a downstream end portion thereof, with the valve seat; and an enlarged spring chamber formed contiguous with the downstream side of the cylinder portion and also with the low-pressure refrigerant outlet port and having a larger diameter than a diameter of the cylinder portion. On the other hand, the differential pressure regulating valve is constructed to comprise a valve portion mounted retractively on the valve seat, a piston inserted slidably in the cylinder portion and having a diametrally enlarged portion on the distal end side thereof and a diametrally contracted portion on the valve portion side, and a spring shoe for receiving a valve-closing spring placed in the spring chamber, wherein the piston is provided therein not only with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port, but also with the orifice which is formed so as to enable the longitudinal hole with the spring chamber.

In this case, preferably, an adjusting screw is screw-engaged with the spring chamber so as to make it possible to adjust the set-load of the valve-closing valve, and the adjusting screw is provided with a longitudinal hole and a lateral hole for enabling the spring chamber to be communicated with the low-pressure refrigerant outlet port.

On the other hand, as a further embodiment, the pressure control valve is constructed to comprise a valve main body having a high-pressure refrigerant inlet port and a low-pressure refrigerant outlet port, a valve seat-attached valved passageway formed in the valve main body for decompressing and guiding the refrigerant from the high-pressure refrigerant inlet port to the low-pressure refrigerant outlet port and configured to enable a constant pressure regulating valve to be fitted therein, and a throttling passageway provided with an orifice having a predetermined effective cross-sectional area for enabling the high-pressure refrigerant inlet port to communicate, through short-cutting or detouring the valve seat, with a region of the valved passageway which is located downstream side of the valve seat, thereby enabling a magnitude of lift of the constant pressure regulating valve from the valve seat to be altered depending on a magnitude of pressure on the high-pressure side.

Preferably, the valve seat-attached valved passageway is constituted by a cylinder portion formed contiguous with the high-pressure refrigerant inlet port and provided, at a downstream end portion thereof, with the valve seat, and an enlarged spring chamber formed contiguous with the downstream side of the cylinder portion and communicating with the low-pressure refrigerant outlet port, the spring chamber having a larger diameter than that of the cylinder portion.

In a preferable embodiment, the constant pressure regulating valve is constructed to comprise a valve portion mounted retractively on the valve seat, a piston inserted slidably in the cylinder portion and having a diametrally enlarged portion on the distal end side thereof and a diametrally contracted portion on the valve portion side, a spring shoe for receiving a valve-closing spring placed in the spring chamber, and a stem portion formed contiguous with the valve portion, wherein the piston is provided therein with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port. The constant pressure regulating valve is also constructed such that atmospheric pressure is to be received by an end face of the stem portion which faces opposite to the piston.

Preferably, the valve portion of the constant pressure regulating valve is configured to have a circular conical surface.

In a further preferable embodiment, an adjusting screw is screw-engaged with the spring chamber so as to make it possible to adjust the set-load of the valve-closing valve and is provided with a through-hole into which the stem portion is slidably inserted.

Preferably, the throttling passageway is constituted by a throttling hole-attached passageway formed contiguous with the low-pressure refrigerant outlet port, and a by-pass passageway formed in a manner to detour the valve seat portion and to enable the throttling hole-attached passageway to be communicated with the spring chamber.

Preferably, the orifice of the throttling passageway is constituted by a throttling hole having a predetermined pore size, and a needle valve which is designed to be inserted into the throttling hole.

Preferably, in this case, the position of the needle valve is made displaceable in relative to the throttling hole as so to make it possible to adjust the effective cross-sectional area of the passageway of the orifice.

In a further preferable embodiment, the valve seat-attached valved passageway is constituted by a cylinder portion formed contiguous with the high-pressure refrigerant inlet port and provided, at a downstream end portion thereof, with the valve seat; and an enlarged spring chamber formed contiguous with the downstream side of the cylinder portion and also with the low-pressure refrigerant outlet port and having a larger diameter than a diameter of the cylinder portion. On the other hand, the constant pressure regulating valve is constructed to comprise a valve portion mounted retractively on the valve seat, a piston inserted slidably in the cylinder portion and having a diametrally enlarged portion on the distal end side thereof and a diametrally contracted portion on the valve portion side, a spring shoe for receiving a valve-closing spring placed in the spring chamber, and a stem portion formed contiguous with the valve portion, wherein the piston is provided therein not only with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port, but also with the orifice which is formed so as to enable the longitudinal hole with the spring chamber.

In a further preferable embodiment, the valve seat is provided with a V-shaped trench functioning as the orifice.

The pressure control valve according to the present invention is featured in that in a situation where a cycling quantity of the refrigerant is small in a refrigerating cycle, high-pressure refrigerant is decompressed down, by making use of the orifice mounted in the throttling passageway, to a pressure (adiabatic expansion) which is advantageous in obtaining excellent operation efficiency, and that in a situation where a cycling quantity of the refrigerant is large in a refrigerating cycle, the differential pressure regulating valve (constant pressure regulating valve) is lifted (to change the opening degree of valve) by taking advantage of a difference in pressure between the high pressure side and the low pressure side (or taking advantage of the pressure of the high-pressure side), since it is impossible, with the employment of only the orifice, to decompress the high-pressure refrigerant to such an extent that is advantageous in obtaining excellent operation efficiency, thereby making it possible to decompress the high-pressure refrigerant down to a pressure (adiabatic expansion) which is advantageous in obtaining excellent operation efficiency.

Since the pressure control valve of the present invention is constructed as described above, it is possible to appropriately adjust the pressure of refrigerant on the outlet side of gas cooler and at the same time, it is possible to more simplify the structure of the valve, to further reduce the manufacturing cost thereof, and to further enhance the operation efficiency as compared with the conventional pressure control valve of temperature-depending type which requires a temperature-sensing element, etc. Additionally, it is now possible to prevent the generation of malfunctions such as failures to open the valve that may be caused due to an increase in pressure of the refrigerant under high temperatures.

### BRIEF DESCRIPTION OF THE SEVERAL VIEWS OF THE DRAWING

FIG. 1 is a longitudinal sectional view illustrating a first embodiment of the pressure control valve according to the present invention;
FIG. 2 is an enlarged cross-sectional view of the differential pressure regulating valve shown in FIG. 1;
FIG. 3 is an enlarged plan view of the needle valve shown in FIG. 1;
FIG. 4 is a longitudinal sectional view illustrating a second embodiment of the pressure control valve according to the present invention;
FIG. 5 is a longitudinal sectional view illustrating a third embodiment of the pressure control valve according to the present invention;
FIG. 6 is a longitudinal sectional view illustrating a fourth embodiment of the pressure control valve according to the present invention; and
FIG. 7 is a flow chart illustrating one example of a steam-compression type refrigerating cycle where the pressure control valve of the prior art is incorporated.

### DETAILED DESCRIPTION OF THE INVENTION

Next, various embodiments of the pressure control valve according to the present invention will be explained in detail with reference to the drawings.

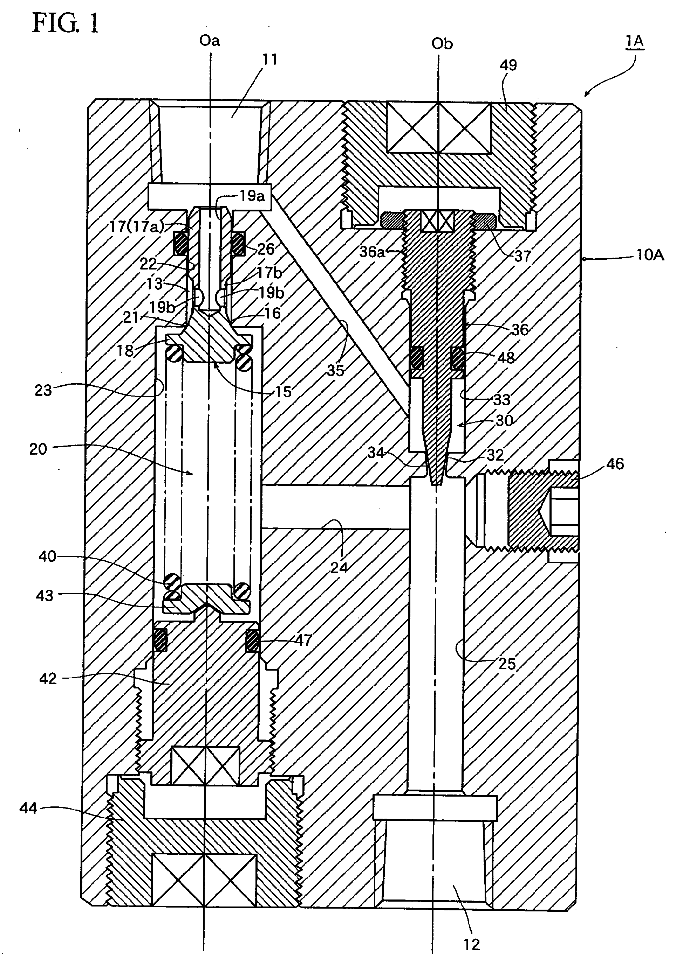

FIG. 1 shows a longitudinal sectional view illustrating a first embodiment of the pressure control valve according to the present invention. The pressure control valve 1A according to the first embodiment shown herein is adapted to be integrated into a steam-compression type refrigerating cycle (CO₂ cycle) 100 which is constructed fundamentally in the same manner as shown FIG. 7 mentioned above, wherein a high-pressure refrigerant that has been introduced into the pressure control valve 1A from a gas cooler 102 through an internal heat exchanger 103 is decompressed down to a pressure (adiabatic expansion) which is advantageous in obtaining excellent operation efficiency before it is introduced into an evaporator 104.

The pressure control valve 1A comprises a valve main body 10A having a high-pressure refrigerant inlet port 11 and a low-pressure refrigerant outlet port 12; a valve seat (valve port) 21-attached valved passageway 20 formed in the valve main body 10A for decompressing and guiding the refrigerant from the high-pressure refrigerant inlet port 11 to the low-pressure refrigerant outlet port 12 and configured to enable a differential pressure regulating valve 15 to be fitted therein; and a throttling passageway 30 provided with an orifice 32 having a predetermined effective cross-sectional area for enabling the high-pressure refrigerant inlet port 11 to communicate, through short-cutting or detouring the valve seat 21, with a region of the valved passageway 20 which is located downstream side of the valve seat 21. As a result, a magnitude of lift of the differential pressure regulating valve 15 from the valve seat 21 is enabled to be altered depending on a magnitude of difference in pressure between a high-pressure side (the high-pressure refrigerant inlet port 11 side) and a low-pressure side (the low-pressure refrigerant outlet port 12 side).

More specifically, the valve seat-attached valved passageway 20 is constituted by a cylinder portion 22 formed contiguous with the high-pressure refrigerant inlet port 11 and provided, at a downstream end portion thereof, with the valve seat (valve port) 21, an enlarged spring chamber 23 formed contiguous with the downstream side of the cylinder portion 22 and having a larger diameter than a diameter of the cylinder portion 22, a downstream passageway 25 formed contiguous with the low-pressure refrigerant outlet port 12, and a communicating passageway 24 for enabling the spring chamber 23 to communicate with the downstream passageway 25.

By the way, the high-pressure refrigerant inlet port 11, the cylinder portion 22 and the spring chamber 23 are all formed coaxially on a common axial line Oa, while the low-pressure refrigerant outlet port 12 and the downstream passageway 25 are all formed coaxially on a common axial line Ob. The communicating passageway 24 is constituted by a lateral hole extending horizontally from one side portion of the valve main body 10A, thus orthogonally intersecting the axial lines Oa and Ob. The outer end portion of this lateral hole is screw-engaged with a sealing plug 46.

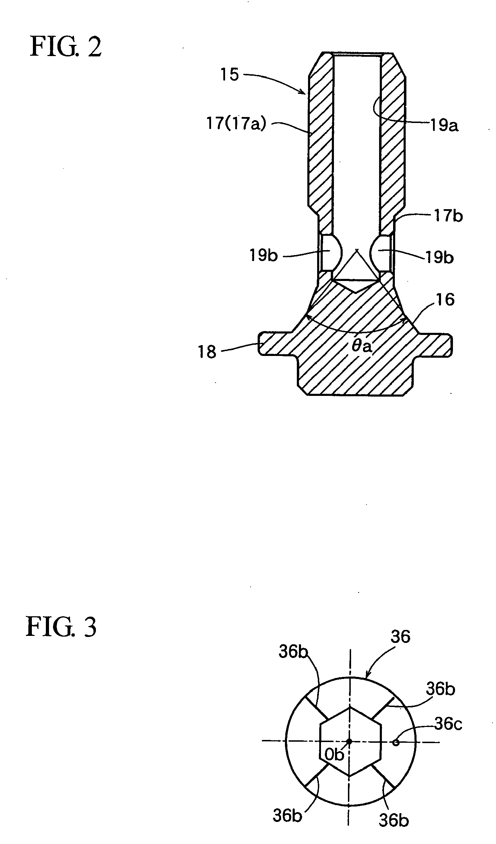

As clearly seen from FIG. 2 (enlarged view) in addition with FIG. 1, the differential pressure regulating valve 15 is constructed to comprise a valve portion 16 mounted retractively on the valve seat 21, a piston 17 inserted slidably in the cylinder portion 22 and having a diametrally enlarged portion 17a on the distal end side thereof and a diametrally contracted portion 17b on the valve portion side, and a spring shoe 18 having a collar-like configuration for receiving a valve-closing spring 40 made of a compression coil spring and placed in the spring chamber 23, wherein the piston 17 is provided therein with a longitudinal hole 19a and a plurality of lateral holes 19b for enabling a valve chamber 13 formed between an inner circumferential wall of the cylinder portion 22 and an outer circumferential wall of the diametrally contracted portion 17b of the piston 17 to be communicated with the high-pressure refrigerant inlet port 11.

Between a distal end portion of the diametrally enlarged portion of the piston 17 in the differential pressure regulating valve 15 and the cylinder portion 22, there is interposed a vibration-proof O-ring 26. Due the provision of this O-ring 26, it is possible to suppress the generation of abnormal noise that may be caused to happen due to the vibration of the differential pressure regulating valve 15 on the occasion when the refrigerant passes through the differential pressure regulating valve 15.

Further, since the differential pressure regulating valve 15 is provided therein with the longitudinal hole 19a and a plurality of lateral holes 19b and these holes are enabled to be utilized as part of the valved passageway 20, it is now possible to secure a sufficient cross-sectional flowing area (effective cross-sectional flowing area), irrespective of the existence or absence of the O-ring 26.

Further, the valve portion 16 of the differential pressure regulating valve 15 is configured to have a circular conical surface having a conic angle θa (for example, 35-90°). As described above, since the valve portion 16 is configured to have a conical surface having a conic angle θa, and also a region of the valve 15 which is located between the valve portion 16 and the diametrally contracted portion 17b is configured into a moderately inclined surface (conical surface, etc.) without forming any stepped portion, it is possible to moderately vary, in conformity with changes of opening degree (magnitude of lift) of the valve that may be caused due to the fluctuation of pressure of high-pressure refrigerant, the flowing area (effective cross-sectional flowing area) of the valve port (valve seat) 21 where a refrigerant is enabled to pass through. As a result, it is now possible to more delicately control the valve in response to the fluctuations of the high-pressure refrigerant and at the same time, it is possible to smooth the passing of refrigerant.

An adjusting screw 42 is screw-engaged with a lower portion of the spring chamber 23 so as to make it possible to adjust the set-load of the valve-closing spring 40. By making use of this adjusting screw 42, a lower end of the valve-closing spring 40 is sustained through a spring shoe 43. By the way, a sealing plug 44 is screwed into a lower end portion of the spring chamber 23.

The throttling passageway 30 provided with the orifice 32 is constituted by a throttling hole (34)-attached passageway 33 having a predetermined pore size and formed contiguous with the low-pressure refrigerant outlet port 12 via a downstream passageway 25 of the valved passageway 20, and a by-pass passageway 35 formed so as to detour the cylinder portion 22 and enabling the high-pressure refrigerant inlet port 11 to be communicated with a region of the throttling hole (34)-attached passageway 33 which is located upstream in relative with the throttling hole 34.

The orifice 32 of the throttling passageway 30 is constituted by a throttling hole 34, and a needle valve 36 which is designed to be inserted into the throttling hole 34. In this embodiment, the position of the needle valve 36 is made displaceable in relative to the throttling hole 34 as so to make it possible to adjust the effective cross-sectional area of the passageway of the orifice 32. More specifically, the needle valve 36 is provided, at one end thereof, with a threaded portion 36a which is adapted to be screw-engaged with one end portion of the throttling hole (34)-attached passageway 33. By the adjustment of the magnitude of engagement of this threaded portion 36a with the throttling hole (34)-attached passageway 33, it is made possible to adjust the effective cross-sectional area of the passageway of the orifice 32. By the way, a locknut 37 is mounted, through screw-engagement, on one end of the threaded portion 36a, and a sealing plug 49 is attached, through screw-engagement, to one end of the passageway 33. Further, as shown in FIG. 3, if a V-shaped groove 36b is engraved beforehand, as a scale, on the top surface of the needle valve 36 at intervals of 90° for example, or if a punch hole 36c is engraved beforehand at a reference point, the aforementioned adjustment of the magnitude of engagement (the adjustment of the effective cross-sectional area of the passageway of the orifice 32) can be easily performed.

According to the pressure control valve 1A of this embodiment constructed as described above, when a cycling quantity of the refrigerant is small in the CO₂ cycle, the differential pressure regulating valve 15 takes a completely closed state (magnitude of lift is zero) as the valve portion 16 is contacted with the valve seat 21 due to the urging force by the valve-closing spring 40, since the difference in pressure between the high-pressure side (the high-pressure refrigerant inlet port 11 side) and the low pressure side (the low-pressure refrigerant outlet port 12 side) is small. In this case, the high-pressure refrigerant is introduced from the high-pressure refrigerant inlet port 11 side into the throttling hole (34)-attached passageway 33 through the by-pass passageway 35. Then, due to the effect of the orifice 32 provided at this passageway 33, the high-pressure refrigerant is decompressed (adiabatic expansion) to a pressure which is advantageous in obtaining excellent operation efficiency, after which the refrigerant is introduced into the evaporator via the downstream passageway 25 and the low-pressure refrigerant outlet port 12.

Whereas, when a cycling quantity of the refrigerant is large (i.e. when it is impossible, with the employment of only the orifice, to decompress the high-pressure refrigerant to such an extent that is advantageous in obtaining excellent operation efficiency), the difference in pressure between the high-pressure side (the high-pressure refrigerant inlet port 11 side) and the low pressure side (the low-pressure refrigerant outlet port 12 side) becomes large, the differential pressure regulating valve 15 is forced to lift resisting against the urging force of the valve-closing spring 40, thereby moving the valve portion 16 away from the valve seat 21, thus opening the valve. In the case, the magnitude of lift (opening degree of valve) of the differential pressure regulating valve 15 from the valve seat 21 varies depending on the difference in pressure between the high-pressure side (the high-pressure refrigerant inlet port 11 side) and the low pressure side (the low-pressure refrigerant outlet port 12 side), so that the high-pressure refrigerant is decompressed (adiabatic expansion)) down to such an extent that is advantageous in obtaining excellent operation efficiency. The refrigerant thus decompressed is permitted to move from the low-pressure refrigerant outlet port 12 into the evaporator 104 after passing through the spring chamber 23, the communicating passageway 24 and the downstream passageway 25.

As described above, according to the pressure control valve 1A of this embodiment, when a cycling quantity of the refrigerant is small, the high-pressure refrigerant is decompressed down, by making use of the orifice mounted in the throttling passageway, to a pressure (adiabatic expansion) which is advantageous in obtaining excellent operation efficiency, and when a cycling quantity of the refrigerant is large, since it is impossible, with the employment of only the orifice, to decompress the high-pressure refrigerant to such an extent that is advantageous in obtaining excellent operation efficiency, the differential pressure regulating valve 15 is lifted (to change the opening degree of valve) by taking advantage of a difference in pressure between the high pressure side and the low pressure side, thereby making it possible to decompress the high-pressure refrigerant down to a pressure (adiabatic expansion) which is advantageous in obtaining excellent operation efficiency.

As a result, it is now possible to appropriately adjust the pressure of refrigerant on the outlet side of gas cooler 102 and at the same time, it is possible to more simplify the structure of the valve, to further reduce the manufacturing cost thereof, and to further enhance the operation efficiency as compared with the conventional pressure control valve of temperature-depending type which necessitates a temperature-sensing element, etc. Additionally, it is now possible to prevent the generation of malfunctions such as failures to open the valve that may be caused due to an increase in pressure of the refrigerant under high temperatures.

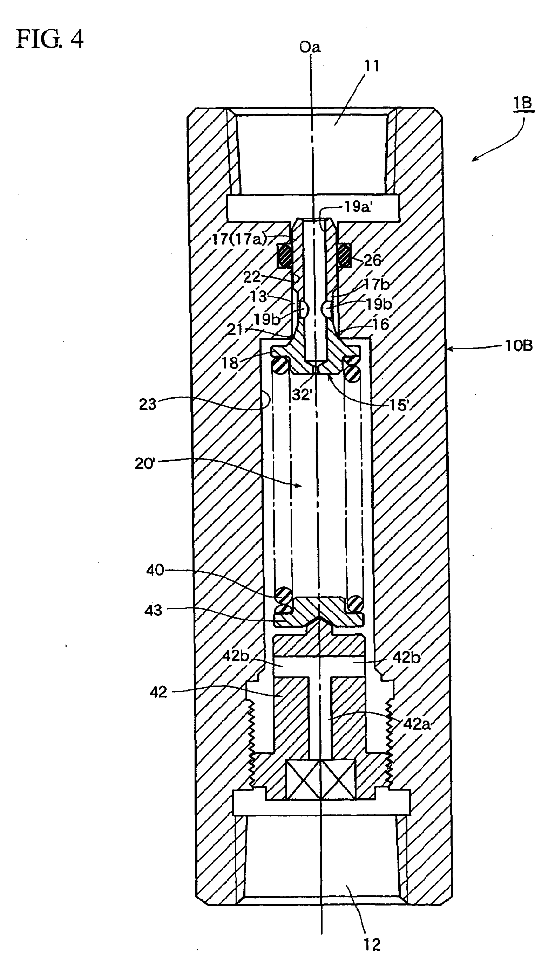

FIG. 4 is a longitudinal sectional view illustrating a second embodiment of the pressure control valve according to the present invention. The pressure control valve 1B is constructed in almost the same manner as that of the first embodiment. This pressure control valve 1B is however aimed at improvements with regard to the simplification of structure, compactness and the reduction in number of components as compared with the pressure control valve of the aforementioned first embodiment. In the following description, the same functions and components as those of the aforementioned first embodiment will be identified by same numbers or symbols, thereby omitting the duplicated explanation thereof and only the features which differ from the aforementioned first embodiment will be mainly explained.

The valve main body 10B shown herein comprises a valve main body 10B which is more slim in configuration than that of the first embodiment and provided, at upper and lower end portions thereof, with a high-pressure refrigerant inlet port 11 and a low-pressure refrigerant outlet port 12, respectively. Further, the valve main body 10B is provided with a valve seat (21)-attached valved passageway 20'.

This valve seat (21)-attached valved passageway 20' is constituted by a cylinder portion 22 formed contiguous with the high-pressure refrigerant inlet port 11 and provided, at a downstream end portion thereof, with the valve seat 21, and an enlarged spring chamber 23 formed contiguous with the downstream side of the cylinder portion 22, communicating with the low-pressure refrigerant outlet port 12 and having a larger diameter than a diameter of the cylinder portion 22. Further, the differential pressure regulating valve 15' is constructed to comprise a valve portion 16 mounted retractively on the valve seat 21, a piston 17 inserted slidably in the cylinder portion 22 and having a diametrally enlarged portion 17a on the distal end side thereof and a diametrally contracted portion 17b on the valve portion side, and a spring shoe 18 for receiving a valve-closing spring 40 placed in the spring chamber 23, wherein the piston 17 is provided therein with a longitudinal hole 19a' and a plurality of lateral holes 19b for enabling a valve chamber 13 formed between an inner circumferential wall of the cylinder portion 22 and an outer circumferential wall of the diametrally contracted portion 17b of the piston 17 to be communicated with the high-pressure refrigerant inlet port 11. The longitudinal hole 19a' is extended more deeply downward (down to the vicinity of the lower end of differential pressure regulating valve 15') than that (19a) of the first embodiment, and an orifice 32' is formed at a lower end portion of the differential pressure regulating valve 15', thereby enabling the longitudinal hole 19a' to communicate with the spring chamber 23.

In contrast to the orifice 32 of the first embodiment, the orifice 32' in this embodiment is incapable of changing the effective cross-sectional area of the valve, thereby providing a stationary orifice having a predetermined pore size.

An adjusting screw 42 is screw-engaged with a lower portion of the spring chamber 23 so as to make it possible to adjust the set-load of the valve-closing spring 40. By making use of this adjusting screw 42, a lower end of the valve-closing spring 40 is sustained through a spring shoe 43. Furthermore, the adjusting screw 42 is provided therein with a longitudinal hole 42a and a plurality of lateral holes 42b for enabling the spring chamber 23 to be communicated with the low-pressure refrigerant outlet port 12.

By the way, in this embodiment, the high-pressure refrigerant inlet port 11, the cylinder portion 22, the spring chamber 23 and the low-pressure refrigerant outlet port 12 are all formed coaxially on a common axial line Oa. The communicating passageway 24, the downstream passageway 25 and the by-pass passageway 35, all necessitated in the pressure control valve of the first embodiment, are no longer employed in this embodiment. The function of the throttling passageway 30 (the throttling hole (34)-attached passageway 33) of the first embodiment is taken up by an orifice (32')-attached longitudinal hole 19a' which is formed inside the differential pressure regulating valve 15'.

According to the pressure control valve of this second embodiment which is constructed as explained above, it is possible to achieve not only almost the same effects as those of the first embodiment, but also further simplification in structure of the valve, further enhanced compactness and further reduction in number of components as compared with the pressure control valve of the first embodiment.

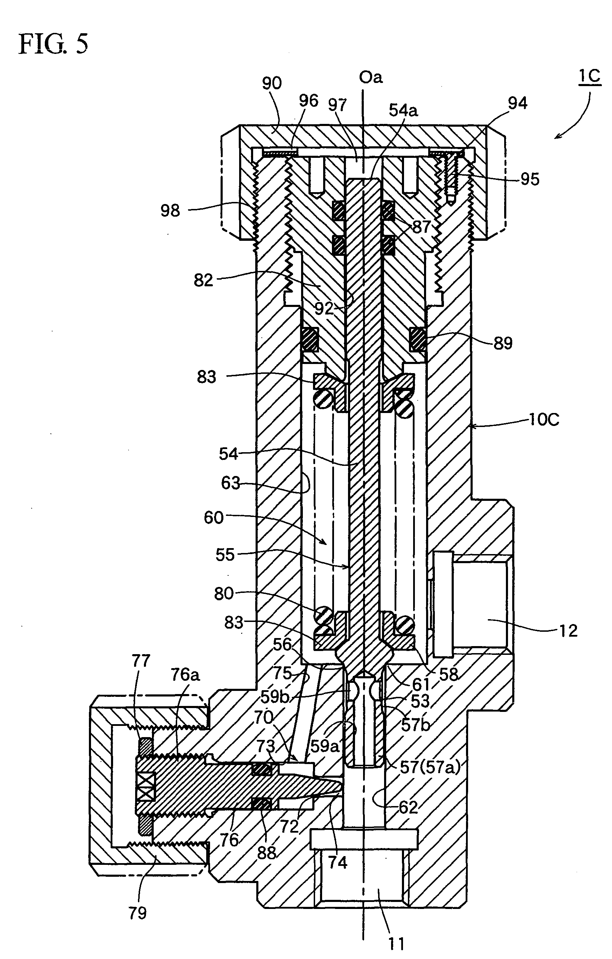

FIG. 5 shows a longitudinal sectional view illustrating a third embodiment of the pressure control valve according to the present invention. In the same manner as described in the aforementioned first and second embodiments, the pressure control valve 1C according to the third embodiment is adapted to be integrated into a steam-compression type refrigerating cycle (CO₂ cycle) 100 which is constructed fundamentally in the same manner as shown FIG. 7 mentioned above, wherein a high-pressure refrigerant that has been introduced into the pressure control valve 1C from a gas cooler 102 through an internal heat exchanger 103 is decompressed down to a pressure (adiabatic expansion) which is advantageous in obtaining excellent operation efficiency before it is introduced into an evaporator 104.

The pressure control valve 1C comprises a valve main body 10C provided, at a lower portion and one side thereof, with a high-pressure refrigerant inlet port 11 and a low-pressure refrigerant outlet port 12, respectively; a valve seat (valve port) 61-attached valved passageway 60 formed in the valve main body 10C for decompressing and guiding the refrigerant from the high-pressure refrigerant inlet port 11 to the low-pressure refrigerant outlet port 12 and configured to enable a constant pressure regulating valve 55 to be fitted therein; and a throttling passageway 70 provided with an orifice 72 having a predetermined effective cross-sectional area for enabling the high-pressure refrigerant inlet port 11 to communicate, through short-cutting or detouring the valve seat 61, with a region of the valved passageway 60 which is located downstream side of the valve seat 61. As a result, a magnitude of lift of the constant pressure regulating valve 55 from the valve seat 61 is enabled to be altered depending on a magnitude of pressure of the high-pressure side (the high-pressure refrigerant inlet port 11 side).

More specifically, the valve seat-attached valved passageway 60 is constituted by a cylinder portion 62 formed contiguous with the high-pressure refrigerant inlet port 11 and provided, at a downstream end portion thereof, with the valve seat (valve port) 61, and an enlarged spring chamber 63 formed contiguous with the downstream side of the cylinder portion 62 and having a larger diameter than a diameter of the cylinder portion 62. By the way, the high-pressure refrigerant inlet port 11, the cylinder portion 62 and the spring chamber 63 are all formed coaxially on a common axial line Oa, while the low-pressure refrigerant outlet port 12 is formed orthogonal to the line Oa.

The constant pressure regulating valve 55 is constructed to comprise a valve portion 56 mounted retractively on the valve seat 61, a piston 57 inserted slidably in the cylinder portion 62 and having a diametrally enlarged portion 57a on the distal end side thereof and a diametrally contracted portion 57b on the valve portion side, a conical receiving seat 58 which is adapted to be engaged with a collar-like spring shoe 83 for receiving a lower end portion of the valve-closing spring 80 made of a compression coil spring and placed in the spring chamber 63, and a stem portion 54 formed contiguous with the valve portion 56. The piston 57 is provided therein with a longitudinal hole 59a and a plurality of lateral holes 59b for enabling a valve chamber 53 (which is formed between an inner circumferential wall of the cylinder portion 62 and an outer circumferential wall of the diametrally contracted portion 57b of the valve) to be communicated with the high-pressure refrigerant inlet port 11.

As described above, since the constant pressure regulating valve 55 is provided therein with the longitudinal hole 59a and a plurality of lateral holes 59b and these holes are enabled to be utilized as part of the valved passageway 60, it is now possible to secure a sufficient cross-sectional flowing area (effective cross-sectional flowing area).

Further, the valve portion 56 of the constant pressure regulating valve 55 is configured to have a circular conical surface having a conic angle θa (for example, 35-90°) as in the cases of the above-mentioned first and second embodiments. As described above, since the valve portion 56 is configured to have a conical surface having a conic angle θa, and also a region of the valve 55 which is located between the valve portion 56 and the diametrally contracted portion 57b is configured into a moderately inclined surface (conical surface, etc.) without forming any stepped portion, it is possible to moderately vary, in conformity with changes of opening degree (magnitude of lift) of the valve that may be caused due to the fluctuation of pressure of high-pressure refrigerant, the flowing area (effective cross-sectional flowing area) of the valve port (valve seat) 61 where a refrigerant is enabled to pass through. As a result, it is now possible to more delicately control the valve in response to the fluctuations of the high-pressure refrigerant and at the same time, it is possible to smooth the passing of refrigerant.

An adjusting screw 82 is screw-engaged with an upper portion of the spring chamber 63 so as to make it possible to adjust the set-load of the valve-closing spring 80. By making use of this adjusting screw 82, an upper end of the valve-closing spring 80 is sustained through a spring shoe 83. This adjusting screw 82 is provided with a through-hole 92, in which an upper portion of the stem portion 54 is slidably inserted, thereby enabling the atmospheric pressure to be received by the top face (top surface which faces opposite to the piston) of the stem portion 54. More specifically, an annular stopper plate 94 for preventing the disengagement of adjusting screw 82 is secured, at three points thereof, to the top surface of the valve main body 10C by making use of screw 95. A cap 90 is screw-engaged with an upper outer circumferential portion of the valve main body 10C so as to enclose the stopper plate 94. This stopper plate 94 provided, on its top surface, with a plurality of grooves 96 extending radially. A cavity portion 97 formed over the end face 54a of the stem portion 54 in the through-hole 92 is communicated, via the screw-engaged portion (thread portion) 98 between an upper outer circumferential portion of valve main body 10C and the cap 90 and via the grooves 96, with air atmosphere. Therefore, the atmospheric pressure is enabled to act on this upper end face 54a of the stem portion 54.

By the way, a couple of O-rings 87 (two-stage) are interposed between the outer circumferential surface of the stem portion 54 and the through-hole 92, and one O-ring 89 is interposed between a lower portion of the adjusting screw 82 and the inner circumferential surface of the valve chamber 63.

On the other hand, the throttling passageway 70 having the orifice 72 therein is constituted by a throttling hole (74)-attached passageway 73 having a predetermined pore size and communicated, via the cylinder portion 62 of the valved passageway 60, with the high-pressure refrigerant inlet port 11; and by a by-pass passageway 75 for enabling, while detouring the valve seat 61, the throttling hole (74)-attached passageway 73 to be communicated with the spring chamber 63.

The orifice 72 of the throttling passageway 70 is constituted by a throttling hole 74, and a needle valve 76 which is designed to be inserted into the throttling hole 74. In this embodiment, the position of the needle valve 76 is made displaceable in relative to the throttling hole 74 as so to make it possible to adjust the effective cross-sectional area of the passageway of the orifice 72. More specifically, the needle valve 76 is provided, at one end thereof, with a threaded portion 76a which is adapted to be screw-engaged with one end portion of the throttling hole (74)-attached passageway 73. By the adjustment of the magnitude of engagement of this threaded portion 76a with the throttling hole (74)-attached passageway 73, it is made possible to adjust the effective cross-sectional area of the passageway of the orifice 72. By the way, a locknut 77 is mounted, through screw-engagement, on one end of the threaded portion 76a, and a cap 79 is attached, through screw-engagement, to one end of the passageway 73.

According to the pressure control valve 1C of this embodiment constructed as described above, in a situation where a cycling quantity of the refrigerant is small in the CO₂ cycle, since the pressure of the high-pressure side (high-pressure refrigerant inlet port 11) is small, the constant pressure regulating valve 55 is enabled to take a completely closed state (magnitude of lift is zero) as the valve portion 56 is contacted with the valve seat 61 due to the urging force by the valve-closing spring 80. On this occasion, the high-pressure refrigerant from the high-pressure refrigerant inlet port 11 is decompressed (adiabatic expansion) to a pressure which is advantageous in obtaining excellent operation efficiency due to the effect of the orifice 72 provided in the throttling hole (74)-attached passageway 73 before the refrigerant is delivered from the low-pressure refrigerant outlet port 12 to the evaporator.

Whereas, when a cycling quantity of the refrigerant is large (i.e. when it is impossible, with the employment of only the orifice 72, to decompress the high-pressure refrigerant to such an extent that is advantageous in obtaining excellent operation efficiency), the pressure of the high-pressure side (the high-pressure refrigerant inlet port 11 side) becomes high, so that the constant pressure regulating valve 55 is forced to lift resisting against the urging force of the valve-closing spring 80, thereby moving the valve portion 56 thereof away from the valve seat 61, thus opening the valve. In the case, since the magnitude of lift (opening degree of valve) of the constant pressure regulating valve 55 from the valve seat 61 varies proportionally depending on the pressure of the high-pressure side (the high-pressure refrigerant inlet port 11 side), the high-pressure refrigerant is decompressed (adiabatic expansion)) down to such an extent that is advantageous in obtaining excellent operation efficiency. The refrigerant thus decompressed is then permitted to be delivered from the low-pressure refrigerant outlet port 12, via the spring chamber 63, to the evaporator 104.

As described above, according to the pressure control valve 1C of this embodiment, when a cycling quantity of the refrigerant is small, the high-pressure refrigerant is decompressed down, by making use of the orifice 72 mounted in the throttling passageway 70, to a pressure (adiabatic expansion) which is advantageous in obtaining excellent operation efficiency. On the other hand, when a cycling quantity of the refrigerant is large, since it is impossible, with the employment of only the orifice 72, to decompress the high-pressure refrigerant to such an extent that is advantageous in obtaining excellent operation efficiency, the constant pressure regulating valve 55 is lifted (to change the opening degree of valve) by taking advantage of the pressure of the high-pressure side, thereby making it possible to decompress the high-pressure refrigerant down to a pressure (adiabatic expansion) which is advantageous in obtaining excellent operation efficiency. As a result, it is now possible to appropriately adjust the pressure of refrigerant on the outlet side of gas cooler 102 and at the same time, it is possible to more simplify the structure of the valve, to further reduce the manufacturing cost thereof, and to further enhance the operation efficiency as compared with the conventional pressure control valve of temperature-depending type which necessitates a temperature-sensing element, etc. Additionally, it is now possible to prevent the generation of malfunctions such as failures to open the valve that may be caused due to an increase in pressure of the refrigerant under high temperatures.

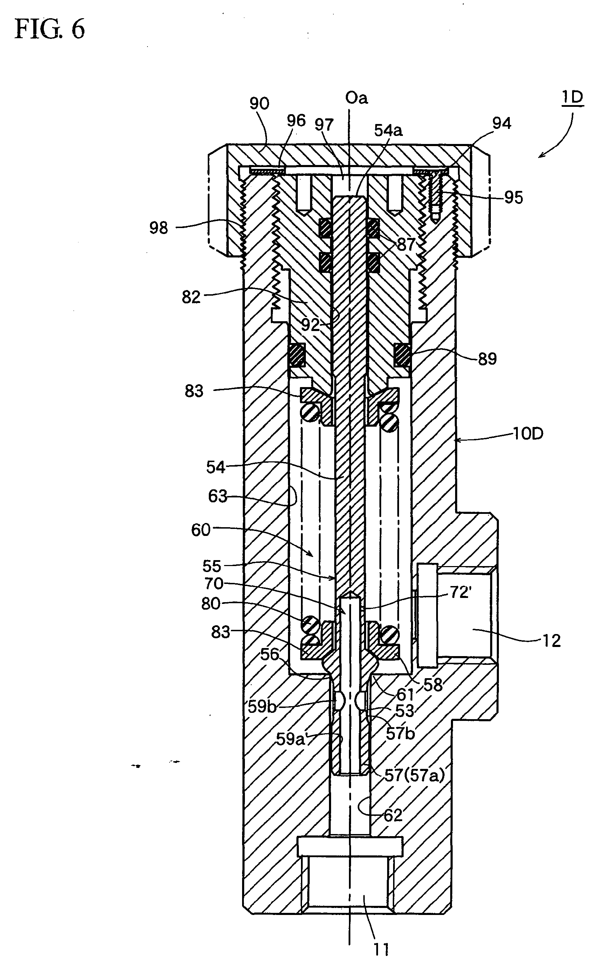

FIG. 6 is a longitudinal sectional view illustrating a fourth embodiment of the pressure control valve according to the present invention. The pressure control valve 1D of this fourth embodiment is constructed to have almost the same function as that of the third embodiment. This pressure control valve 1D is however aimed at improvements with regard to the simplification of structure, compactness and the reduction in number of components as compared with the pressure control valve 1A of the aforementioned first embodiment. In the following description, the same functions and components as those of the aforementioned first embodiment will be identified by same numbers or symbols, thereby omitting the duplicated explanation thereof and only the features which differ from the aforementioned first embodiment will be mainly explained.

The pressure control valve 1D shown herein comprises a valve main body 10D is more slim than that of the first embodiment and provided with a high-pressure refrigerant inlet port 11 and a low-pressure refrigerant outlet port 12; and a constant pressure regulating valve 55 comprising a piston portion 57. The piston portion 57 is provided therein with a longitudinal hole 59a' and a plurality of lateral holes 59b for enabling a valve chamber 53 (which is formed between an inner circumferential wall of the cylinder portion 62 and an outer circumferential wall of the diametrally contracted portion 57b of the valve) to be communicated with the high-pressure refrigerant inlet port 11. This longitudinal hole 59a' is extended upward more than that (59a) of the third embodiment (i.e. extended passing through the valve portion 56 and the receiving seat 58 and penetrating into the stem portion 54). The longitudinal hole 59a' is provided, in a sidewall portion thereof located in the vicinity of the bottom thereof, with an orifice 72', thereby enabling this longitudinal hole 59a' to be communicated with the spring chamber 63.

In contrast to the orifice 72 of the third embodiment, the orifice 72' of this embodiment is incapable of changing its effective cross-sectional area of passageway. Namely, this orifice 72' is a stationary orifice having a predetermined pore size.

By the way, in this embodiment, the function of the throttling passageway 70 (the throttling hole (74)-attached passageway 73) of the third embodiment is taken up by an orifice (72')-attached longitudinal hole 59a' which is formed inside the constant pressure regulating valve 55.

According to the pressure control valve 4B of the fourth embodiment which is constructed as described above, it is possible to achieve not only almost the same effects as those of the third embodiment, but also further simplification in structure of the valve, further enhanced compactness and further reduction in number of components as compared with the pressure control valve of the third embodiment.

By the way, instead of employing the aforementioned orifices 32, 32', 72 and 72', a V-shaped groove may be formed on the valve seat for instance, thereby enabling the V-shaped groove to function as an orifice on the occasion of completely closing the differential pressure regulating valve or the constant pressure regulating valve.

## Claims

1. A pressure control valve comprising:
a valve main body having a high-pressure refrigerant inlet port and a low-pressure refrigerant outlet port;
a valve seat-attached valved passageway formed in the valve main body for decompressing and guiding the refrigerant from the high-pressure refrigerant inlet port to the low-pressure refrigerant outlet port and configured to enable a differential pressure regulating valve to be fitted therein; and
a throttling passageway provided with an orifice having a predetermined effective cross-sectional area for enabling the high-pressure refrigerant inlet port to communicate, through short-cutting or detouring the valve seat, with a region of the valved passageway which is located downstream side of the valve seat, thereby enabling a magnitude of lift of the differential pressure regulating valve from the valve seat to be altered depending on a magnitude of difference in pressure between a high-pressure side and a low-pressure side.

2. The pressure control valve according to claim 1, wherein the valve seat-attached valved passageway is constituted by a cylinder portion formed contiguous with the high-pressure refrigerant inlet port and provided, at a downstream end portion thereof, with the valve seat, an enlarged spring chamber formed contiguous with the downstream side of the cylinder portion and having a larger diameter than a diameter of the cylinder portion, a downstream passageway formed contiguous with the low-pressure refrigerant outlet port, and a communicating passageway for enabling the spring chamber to communicate with the downstream passageway.

3. The pressure control valve according to claim 2, wherein the differential pressure regulating valve comprises a valve portion mounted retractively on the valve seat, a piston inserted slidably in the cylinder portion and having a diametrally enlarged portion on the distal end side thereof and a diametrally contracted portion on the valve portion side, and a spring shoe for receiving a valve-closing spring placed in the spring chamber, wherein the piston is provided therein with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port.

4. The pressure control valve according to claim 3, wherein a vibration-proof O-ring is interposed between the diametrally enlarged portion of the piston in the differential pressure regulating valve and the cylinder portion.

5. The pressure control valve according to claim 3, wherein the valve portion of the differential pressure regulating valve is configured to have a circular conical surface.

6. The pressure control valve according to claim 3, wherein an adjusting screw is screw-engaged with the spring chamber so as to make it possible to adjust the set-load of the valve-closing valve.

7. The pressure control valve according to claim 3, wherein the throttling passageway is constituted by a throttling hole-attached passageway formed contiguous with the low-pressure refrigerant outlet port, and a by-pass passageway formed so as to detour the valve seat portion and enabling the high-pressure refrigerant inlet port to be communicated with a region of the throttling hole-attached passageway which is located upstream in relative with the throttling hole.

8. The pressure control valve according to claim 1, wherein the orifice of the throttling passageway is constituted by a throttling hole having a predetermined pore size, and a needle valve which is designed to be inserted into the throttling hole.

9. The pressure control valve according to claim 8, wherein the position of the needle valve is made displaceable in relative to the throttling hole as so to make it possible to adjust the effective cross-sectional area of the passageway of the orifice.

10. The pressure control valve according to claim 1, wherein the valve seat-attached valved passageway is constituted by a cylinder portion formed contiguous with the high-pressure refrigerant inlet port and provided, at a downstream end portion thereof, with the valve seat; and an enlarged spring chamber formed contiguous with the downstream side of the cylinder portion and also with the low-pressure refrigerant outlet port and having a larger diameter than a diameter of the cylinder portion;
the differential pressure regulating valve being also featured in that it comprises a valve portion mounted retractively on the valve seat, a piston inserted slidably in the cylinder portion and having a diametrally enlarged portion on the distal end side thereof and a diametrally contracted portion on the valve portion side, and a spring shoe for receiving a valve-closing spring placed in the spring chamber, wherein the piston is provided therein not only with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port, but also with the orifice which is formed so as to enable the longitudinal hole with the spring chamber.

11. The pressure control valve according to claim 10, wherein an adjusting screw is screw-engaged with the spring chamber so as to make it possible to adjust the set-load of the valve-closing valve, and the adjusting screw is provided with a longitudinal hole and a lateral hole for enabling the spring chamber to be communicated with the low-pressure refrigerant outlet port.

12. A pressure control valve comprising:
a valve main body having a high-pressure refrigerant inlet port and a low-pressure refrigerant outlet port;
a valve seat-attached valved passageway formed in the valve main body for decompressing and guiding the refrigerant from the high-pressure refrigerant inlet port to the low-pressure refrigerant outlet port and configured to enable a constant pressure regulating valve to be fitted therein; and
a throttling passageway provided with an orifice having a predetermined effective cross-sectional area for enabling the high-pressure refrigerant inlet port to communicate, through short-cutting or detouring the valve seat, with a region of the valved passageway which is located downstream side of the valve seat, thereby enabling a magnitude of lift of the constant pressure regulating valve from the valve seat to be altered depending on a magnitude of pressure on the high-pressure side.

13. The pressure control valve according to claim 12, wherein the valve seat-attached valved passageway is constituted by a cylinder portion formed contiguous with the high-pressure refrigerant inlet port and provided, at a downstream end portion thereof, with the valve seat, and an enlarged spring chamber formed contiguous with the downstream side of the cylinder portion and communicating with the low-pressure refrigerant outlet port, the spring chamber having a larger diameter than that of the cylinder portion.

14. The pressure control valve according to claim 13, wherein the constant pressure regulating valve comprises a valve portion mounted retractively on the valve seat, a piston inserted slidably in the cylinder portion and having a diametrally enlarged portion on the distal end side thereof and a diametrally contracted portion on the valve portion side, a spring shoe for receiving a valve-closing spring placed in the spring chamber, and a stem portion formed contiguous with the valve portion, wherein the piston is provided therein with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port; the constant pressure regulating valve being also featured in that atmospheric pressure is to be received by an end face of the stem portion which faces opposite to the piston.

15. The pressure control valve according to claim 14, wherein the valve portion of the constant pressure regulating valve is configured to have a circular conical surface.

16. The pressure control valve according to claim 14, wherein an adjusting screw is screw-engaged with the spring chamber so as to make it possible to adjust the set-load of the valve-closing valve and is provided with a through-hole into which the stem portion is slidably inserted.

17. The pressure control valve according to claim 14, wherein the throttling passageway is constituted by a throttling hole-attached passageway formed contiguous with the low-pressure refrigerant outlet port, and a by-pass passageway formed in a manner to detour the valve seat portion and to enable the throttling hole-attached passageway to be communicated with the spring chamber.

18. The pressure control valve according to claim 12, wherein the orifice of the throttling passageway is constituted by a throttling hole having a predetermined pore size, and a needle valve which is designed to be inserted into the throttling hole.

19. The pressure control valve according to claim 18, wherein the position of the needle valve is made displaceable in relative to the throttling hole as so to make it possible to adjust the effective cross-sectional area of the passageway of the orifice.

20. The pressure control valve according to claim 12, wherein the valve seat-attached valved passageway is constituted by a cylinder portion formed contiguous with the high-pressure refrigerant inlet port and provided, at a downstream end portion thereof, with the valve seat; and an enlarged spring chamber formed contiguous with the downstream side of the cylinder portion and also with the low-pressure refrigerant outlet port and having a larger diameter than a diameter of the cylinder portion;
the constant pressure regulating valve being also featured in that it comprises a valve portion mounted retractively on the valve seat, a piston inserted slidably in the cylinder portion and having a diametrally enlarged portion on the distal end side thereof and a diametrally contracted portion on the valve portion side, a spring shoe for receiving a valve-closing spring placed in the spring chamber, and a stem portion formed contiguous with the valve portion, wherein the piston is provided therein not only with a longitudinal hole and a lateral hole for enabling a valve chamber formed between an inner circumferential wall of the cylinder portion and an outer circumferential wall of the diametrally contracted portion of the piston to be communicated with the high-pressure refrigerant inlet port, but also with the orifice which is formed so as to enable the longitudinal hole with the spring chamber.

21. The pressure control valve according to claim 1 or 12, wherein the valve seat is provided with a V-shaped trench functioning as the orifice.
